# EUROPÄISCHE PATENTSCHRIFT

(11) **EP 1 257 746 B1**
(45) Veröffentlichungstag und Bekanntmachung des Hinweises auf die Patenterteilung: **20.10.2004**
(21) Anmeldenummer: 00920337.3
(22) Anmeldetag: 24.02.2000
(51) Int. Cl.: F16D 48/06

(54) **AUTOMATISCH BETÄTIGTE KRAFTFAHRZEUG-KUPPLUNG UND VERFAHREN ZUM STEUERN EINER KRAFTFAHRZEUG-KUPPLUNG**
AUTOMATICALLY ACTUATED CLUTCH OF A MOTOR VEHICLE AND A METHOD FOR CONTROLLING A CLUTCH OF A MOTOR VEHICLE
EMBRAYAGE AUTOMATIQUE POUR VEHICULE AUTOMOBILE, ET PROCEDE DE COMMANDE D'UN EMBRAYAGE DE VEHICULE AUTOMOBILE

(43) Veröffentlichungstag der Anmeldung: 20.11.2002
(73) Patentinhaber: SIEMENS AKTIENGESELLSCHAFT, 80333 München (DE)
(72) Erfinder: NOCK, Ernst, D-93053 Regensburg (DE); WILD, Johann, D-92318 Neumarkt (DE)
(86) Internationale Anmeldenummer: PCT/DE2000/000520
(87) Internationale Veröffentlichungsnummer: WO 2001/063136

(56) Entgegenhaltungen:
- EP-A- 0 320 261
- EP-A- 0 441 290
- DE-A- 3 443 064
- DE-A- 19 751 455
- DE-A- 19 823 089

## Beschreibung

Die Erfindung betrifft eine Kraftfahrzeug-Kupplung nach dem Oberbegriff von Anspruch 1 (DE-A-19823089) und ein Verfahren nach dem Oberbegriff von Anspruch 6. Die automatisch betätigte Kraftfahrzeug-Kupplung weist auf ein Stellglied zum Betätigen der Kupplung, einen die axiale Stellung der Kupplung entlang eines Kupplungsweges erfassenden Positionssensor und eine die Stellung der Kupplung festlegende Steuerung.

Neben den herkömmlichen durch den Fahrer direkt betätigten Kraftfahrzeugkupplungen werden zunehmend automatisch betätigte Kupplungen in Kraftfahrzeugen eingesetzt (siehe zum Beispiel DE 44 34 111 A1). Bei solchen Kupplungen treten aber Probleme auf: Lineare Positionssensoren sind teuer und aufgrund ihrer Dimensionen schwer an der Kupplung oder an deren Stellantrieb zu montieren. Da eine Kupplungsregelung sicherheitskritisch ist, muss die Funktionsfähigkeit des Sensors ständig anhand von anderweitig gewonnenen, gemessenen oder berechneten Zustandsgrößen überprüft werden.

Der Erfindung liegt die Aufgabe zugrunde, eine automatisch betätigte Kraftfahrzeug-Kupplung und ein Verfahren zum Steuern einer solchen Kupplung zu schaffen, deren Herstelllungsund Montageaufwand gering sind und deren Funktion sicher ist.

Die Aufgabe der Erfindung wird durch eine automatisch betätigte Kraftfahrzeug-Kupplung nach Anspruch 1 und durch ein Verfahren nach Anspruch 6 gelöst. Die Steuerung der Kupplung enthält einen Regelkreis mit einem Streckenmodell, mit dem das Signal des Positionssensors auf Plausibilität überprüft wird und durch das bei einer Abweichung die Stellung der Kupplung ermittelt wird.

Zweckmäßige Weiterbildungen der Erfindung sind in den Unteransprüchen niedergelegt.

Die Vorteile der Erfindung liegen unter anderem darin, dass sie eine einfache Realisierung eines Notfahrprogramms bei Ausfall des Kupplungspositionssensors ergibt.

Ausführungsbeispiele der Erfindung werden im folgenden anhand der Zeichnungen erläutert. Es zeigen:
- Figur 1: einen Kraftfahrzeugantrieb mit einer automatisch betätigten Kupplung gemäß der Erfindung;
- Figur 2: einen Regelkreis der Kupplung nach Figur 1;
- Figur 3: den Verlauf der Getriebedrehzahl abhängig von der Stellung der Kupplung nach Figur 1;
- Figur 4: die Lage einiger charakteristischer Punkte entlang des Kupplungsweges;
- Figur 5: eine schematische Darstellung eines Verfahrens zum Trainieren eines regelungstechnischen Modells zum Berechnen der Kupplungsposition;
- Figur 6: die Kennlinie Steuerstrom-Ölfluss eines Druckminderventils in dem Regelkreis nach Figur 2;
- Figur 7: die Kennlinie Ausrückweg-Kraft bei einer Trockenkupplung, und
- Figur 8: ein Ablaufdiagramm eines von der Steuerung der automatisch betätigen Kupplung nach Figur 1 abgearbeiteten Programms.

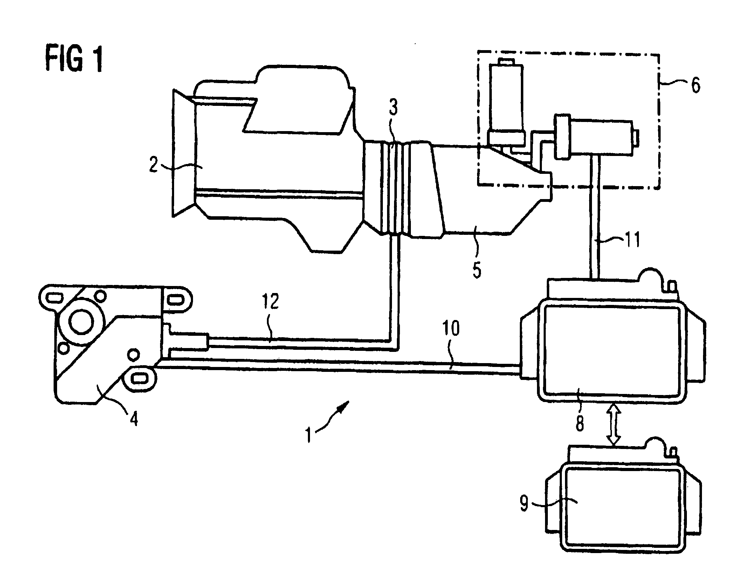

Ein Kraftfahrzeugantrieb 1 (Figur 1) weist - soweit er für die vorliegende Erfindung von Bedeutung ist - folgende Bestandteile auf: einen Motor 2, eine Kupplung 3, einen Kupplungsaktuator (im folgenden auch als Stellglied oder Stellantrieb für die Kupplung bezeichnet) 4, ein Schaltgetriebe 5, einen Getriebeaktuator 6, eine elektronische Steuerung 8 für das Stellglied 4 und den Getriebeaktuator 6 sowie eine Motorsteuerung 9. Die elektronische Steuerung 8 ist mit dem Stellglied 4 durch Steuer- und Signalleitungen 10 und mit dem Getriebeaktuator 6 durch Steuer- und Signalleitungen 11 verbunden.

Das Stellglied 4 kann als elektromotorisch angetriebener oder als hydraulisch angetriebener Aktuator ausgebildet sein. Im hier beschriebenen Ausführungsbeispiel wird ein hydraulisches Stellglied 4 verwendet, das mit der Kupplung 3 durch eine Kraftübertragungsanordnung 12 verbunden ist, die zum Beispiel als Druckleitung ausgebildet ist.

Bei dem Kraftfahrzeugantrieb 1 ist in dem vorliegenden Ausführungsbeispiel das Schaltgetriebe 5 als konventionelles Handschaltgetriebe ausgebildet. Dabei wird die Kupplung 3 - durch die elektronische Steuerung 8 gesteuert - automatisch betätigt, sobald der Fahrer an den, hier nicht dargestellten, Schalthebel greift, um einen Gangwechsel durchzuführen. Ein solches Getriebe wird als automatisches (oder auch: automatisiertes) Handschaltgetriebe ASG bezeichnet. Der erfindungsgemäße Kraftfahrzeugantrieb kann aber auch mit vollautomatischen Schaltgetrieben realisiert werden, die allerdings in der Regel mit einer Nasskupplung oder einem Strömungswandler versehen sind.

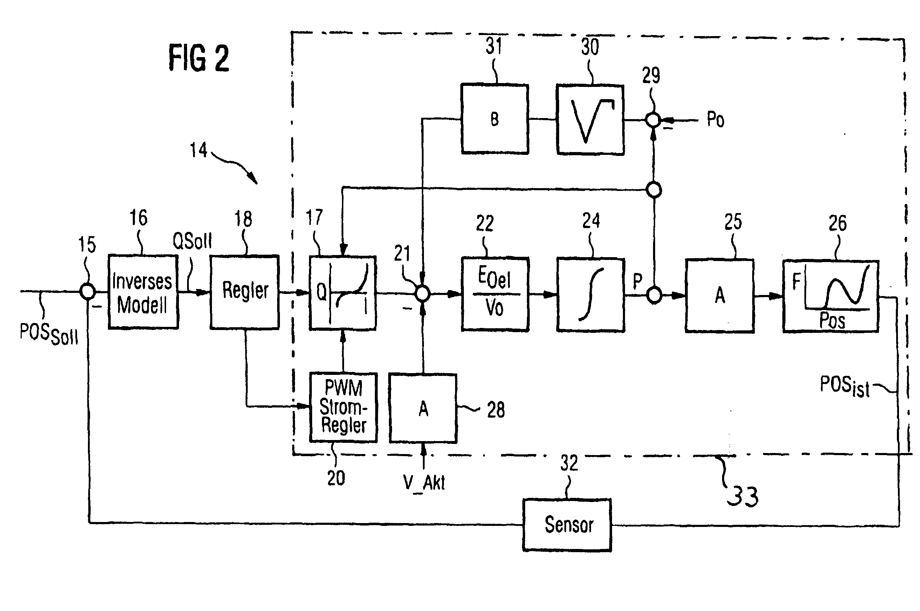

Ein Sollwert der Kupplungsposition Pos_{Soll} ist in einem Regelkreis 14 die Führungsgröße (Figur 2), die über ein Addierglied 15 einem Übertragungsglied 16 zugeführt wird. Dieses Übertragungsglied 16 stellt ein regelungstechnisches inverses Modell der Regelstrecke dar, und es wird im folgenden als Streckenmodell bezeichnet. Die elektronische Steuerung 8 für die Kupplung wird deshalb auch als modellbasierte Steuerung bezeichnet. Durch diese ein regelungstechnisches inverses Streckenmodell einschließende modellbasierte Steuerung 8 werden die erheblichen Nichtlinearitäten des Stellglieds 4 wirksam kompensiert.

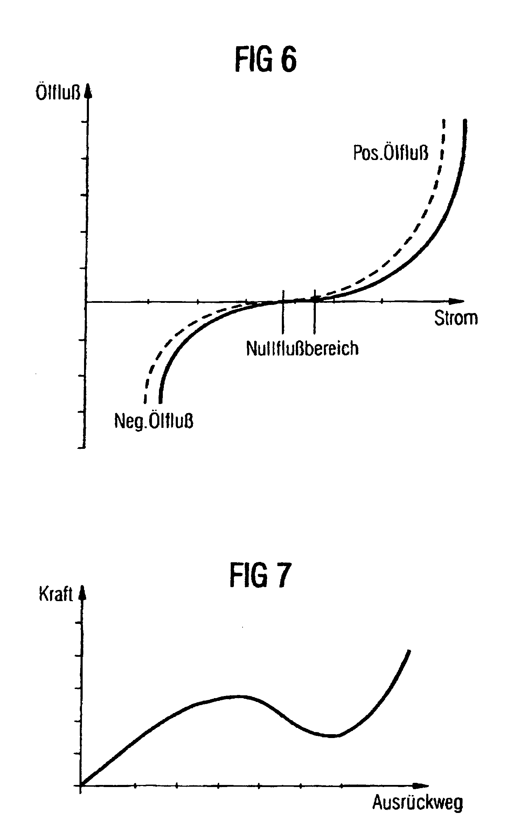

Dem zweiten Eingang des Addiergliedes 15 wird der negierte Istwert der Kupplungsposition Posᵢₛₜ zugeführt. Das Übertragungsglied oder "inverse Streckenmodell" 16 berechnet aus der Differenz zwischen dem Sollwert Pos_{Soll} und dem Istwert Posᵢₛₜ der Kupplungsposition den erforderlichen Ölfluss Qₛₒₗₗ für ein als Stellglied dienendes Druckminderventil 17, das in dem Blockdiagramm von Figur 2 durch seine Ventilkennlinie dargestellt ist. Ein Regler 18 sorgt aufgrund einer geeigneten Auswahl seiner Parameter für die Stabilität, die stationäre Genauigkeit und die erforderliche Dynamik des Einschwingvorganges der Regelung. Die Stellgröße, d. h. das Ausgangssignal des Reglers 18 wird in einem Stromregler oder Modulator 20 in einen pulsweitenmodulierten oder PWM-Steuerstrom zum Steuern des Druckminderventils 17 umgesetzt (siehe auch Figur 6).

Der Durchfluss von Hydrauliköl durch das Druckminderventil 17 ist abhängig vom Systemdruck und von der Druckdifferenz zwischen dem Systemdruck und dem Zylinderdruck in dem Kupplungsaktuator 4 beim Öffnen der Kupplung bzw. von der Druckdifferenz zwischen dem Zylinderdruck und dem Druck in einem Tank beim Schließen der Kupplung. Der Systemdruck wird in einem hier nicht dargestellten Druckgenerator mit Tank erzeugt.

Der Ölfluss gelangt von dem hydraulischen Druckminderventil 17 über ein Addierglied 21 zu einem Dividierglied 22, in dem der Elastizitätsmodul des Hydrauliköls E_{Öl} durch das Ölvolumen des Kolbenvorraums V₀ dividiert wird. Eine Integration der sich dabei ergebenden Konstante multipliziert mit dem Ölfluss oder Hydraulikölstrom ergibt den sich in dem Zylinder des Kupplungsaktuators 4 aufbauende Druck P. Dieser Druckwert P wird in einem Multiplizierglied 25 mit der Kolbenfläche A multipliziert. Die Kennlinie Ausrückkraft der Kupplung 3 abhängig von deren Ausrückweg (siehe auch Figur 7) ist in einem Kennlinienspeicher 26 abgelegt, und somit kann die jeweilige Kupplungsposition Pos_{Ist} abhängig von dem Ölfluss oder dem entsprechenden Druckaufbau ermittelt werden.

Der Wert der Aktuatorgeschwindigkeit V_Akt wird in einem Multiplizierglied 28 mit der Kolbenfläche A multipliziert und das negierte Ergebnis auf das Addierglied 21 gegeben. Der Druckwert P wird über ein Addierglied 29, in dem der Wert des Arbeitsdrucks P₀ vom ihm abgezogen wird, über ein Wurzelkennlinienglied 30 und über ein Multiplizierglied 31, in dem eine Multiplikation mit einem Blendendurchflussfaktor B erfolgt, zu dem Addierglied 21 rückgeführt. Außerdem wird der Druckwert P zu dem Ventilkennlinienglied 17 rückgeführt.

Der Istwert der Kupplungsposition Pos_{Ist} gelangt von dem Ausgang des Kennlinienspeichers zu einem Positionssensor 32 und dessen Ausgangssignal wird als Istwert negiert dem Addierglied 15 zugeführt und somit dort von dem Sollwert Pos_{Soll} der Kupplungsposition abgezogen, was eine Regelabweichung Pos_{Soll} minus Pos_{Ist} ergibt. Damit ist der Regelkreis 14 geschlossen. Das Stellglied und die gesamte Regelstrecke des Regelkreises 14 sind durch eine strichpunktierte Linie 33 zeichnerisch zusammengefasst.

Der Positionssensor 32 ist in einer ersten Ausführung als linearer Positionssensor ausgebildet, in einer weiteren Ausführung hingegen als Punktsensor oder als Sensor mit kleinem Messbereich, zum Beispiel in Form eines Hallsensors.

Bei einem Ausfall des Positionssensors 32 tritt ein sogenanntes Notfahrprogramm in Aktion, bei dem die Qualität der Kupplungslagepositionierung zwar eingeschränkt sein kann, die o-riginäre Funktion der Kupplung aber in allen Fällen gewährleistet bleibt.

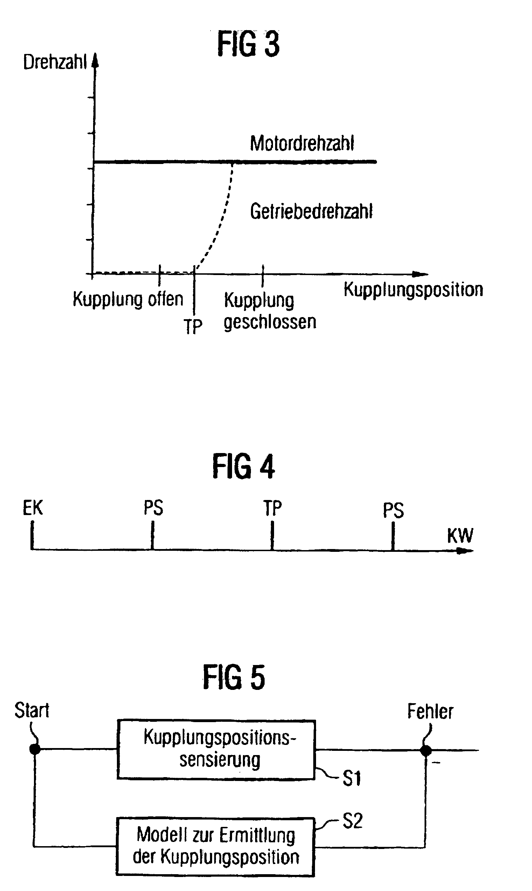

Aus dem Diagramm von Figur 3 ist die Abhängigkeit der Getriebeeingangsdrehzahl von der Kupplungsposition bei konstanter Motordrehzahl ersichtlich. Es gibt einige markante Punkte der Kupplungsposition entlang des Kupplungsweges KW (Figuren 3 und 4), die als Referenzpunkte für die Überprüfung der Kupplungsposition dienen können. Im komplett eingekuppelten Zustand sorgt die Federkraft der hier nicht dargestellten Kupplungsfeder(n) für das Erreichen einer Endlage EK. Außerdem kann ein Berührpunkt (auch: Touchpoint) TP erfasst werden, welcher der Position entspricht, bei der die Kupplung beginnt, Drehoment auf das Getriebe zu übertragen. Dieser Berührpunkt lässt sich während des Fahrzeugstillstandes bei Getriebeneutralstellung, mit laufendem Motor und mit sich langsam schließender Kupplung ermitteln.

Als weitere Referenzpunkte können optional ein oder mehrere entlang des Kupplungsweges KW angebrachte Punktsensoren PS, die auch als Sensoren mit kleinem Messbereich wie zum Beispiel als Hallelemente ausgebildet sein können, eingesetzt werden (Figur 4).

Die genannten Referenzpunkte werden dazu verwendet, die modellbasierte Steuerung individuell in einem zyklisch durchlaufenen Unterprogramm (Figur 5) zu trainieren. Ausgehend von einem Startpunkt wird einerseits die Kupplungsposition in einem Schritt S1 durch den Positionssensor 32 erfasst und andererseits in einem parallelen Schritt S2 die Kupplungsposition mit dem Streckenmodell 16 berechnet. Die Subtraktion der beiden Ergebnisse ergibt einen Fehler, der zu minimieren ist. Dazu werden die Kenngrößen der Komponenten des Kupplungsantriebs des jeweils vorliegenden Kraftfahrzeugtyps derart adaptiert, dass die durch die modellbasierte Steuerung festgelegte Kupplungsposition möglichst exakt mit der durch den linearen Positionssensor erfassten Kupplungsposition übereinstimmt.

Die in dem Ventilkennlinienglied 17 abgelegte Kennlinie eines hydraulischen Druckminderventils des Kupplungsaktuators 4 "Ölfluss abhängig von Steuerstrom" ist in Figur 6 als durchgezogene Linie im Einzelnen dargestellt. Mit der gestrichelten Kennlinie ist der Verlauf des Ölflusses bei umgekehrten elektrischem Strom dargestellt, d. h. die durch die Hysterese des hydraulischen Druckminderventils verursachte Abhängigkeit.

Für die Kupplungsposition charakteristische Kenngrößen sind die Ventilkennlinie 17 des hydraulischen Druckminderventils, die Kenngrößen der hydraulischen Leitungen und die Ausrückweg-Kraft-Kennlinie (Figur 7) der Kupplung. Die Kupplung und ihr Antrieb sind Umwelteinflüssen wie Temperaturänderungen und Alterung unterworfen. Die Temperaturschwankungen können anhand des jeweiligen Betriebsmodus (zum Beispiel Anfahrmodus, Kriechmodus) des Kraftfahrzeugs abgeschätzt werden. Die durch solche Einflüsse bedingten Störgrößen der Kupplungssteuerung werden durch die vorstehende beschriebene Adaption ebenfalls kompensiert.

Die Kennlinie Ausrückkraft-Ausrückweg der Kupplung 3 (Figur 7) ermöglicht es, die Position der Kupplung aus der Kenntnis des hydraulischen Drucks im Druckraum des Stellglieds 4, der sich aus dem Ölfluss ergibt, zu ermitteln. Zwar lässt die Kennlinie allein wegen ihres aus der Zeichnung ersichtlichen Zwischenmaximums und -minimums keine Zuordnung in dem Gesamtbereich zu, dies ist aber nicht erforderlich, da in der elektronischen Steuerung 8 die angenäherte Kupplungsposition jeweils bekannt ist.

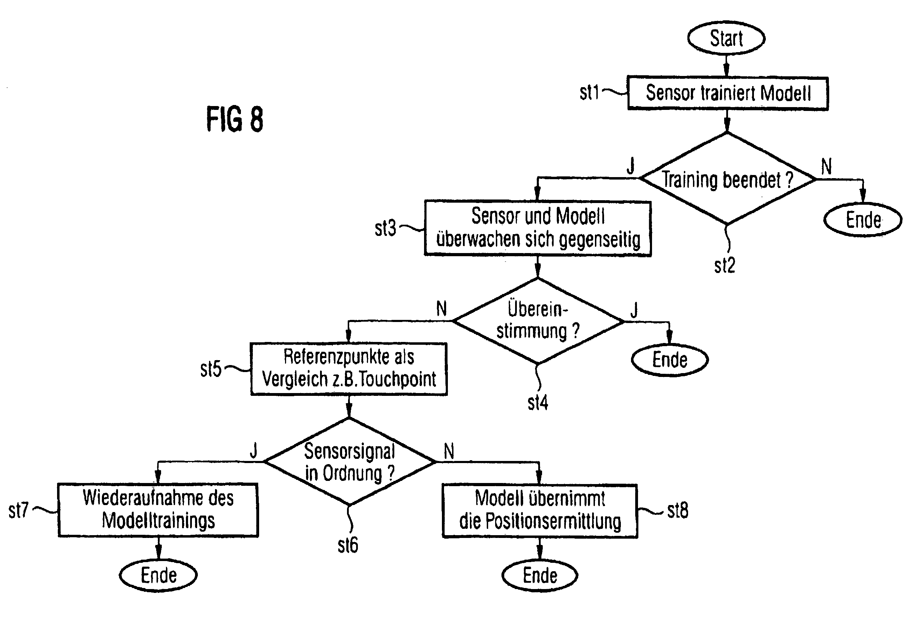

Ein von der elektronischen Steuerung 8 beim Steuern der Kupplung 3 abgearbeitetes Programm weist folgende Programmschritte auf (Figur 8):

### Start des Programms.

- st1:: Der Positionssensor 32 trainiert das Streckenmodell 16 (entspricht den Schritten S1 und S2 von Figur 5).
- st2:: Es erfolgt eine Abfrage, ob das Training beendet ist? Ist die Antwort nein, so springt das Programm an sein Ende, das heißt ein Programmzyklus ist beendet. Ist die Antwort ja, so folgt:
- st3:: Der Positionssensor 32 und das Streckenmodell 16 überwachen sich gegenseitig.
- St4:: Es erfolgt eine Abfrage, ob eine Übereinstimmung zwischen dem Sensorsignal und dem Rechenergebnis des Modells besteht. Ist die Antwort nein, so springt das Programm an sein Ende. Ist die Antwort ja, so folgt:
- st5:: Ein Referenzpunkt (zum Beispiel der Berührpunkt) wird für einen Vergleich mit dem Sensorsignal herangezogen.
- st6:: Es erfolgt eine Abfrage, ob das Sensorsignal in Ordnung ist. Ist die Antwort ja, so springt das Programm zu einem Schritt st7, ist die Antwort nein, so springt es zu einem Schritt st8.
- st7:: Das Modelltraining wird wieder aufgenommen und danach erfolgt ein Sprung zu dem Ende des Programms.
- st8:: Das inverse Modell übernimmt die ermittelte Sensorposition. Danach springt das Programm zu seinem Ende.

Der erste Programmdurchlauf ist nun beendet. Das Programm wird zyklisch wiederholt. Die Plausibilität des Sensorsignals wird laufend überprüft und das Modelltraining laufend weiter fortgeführt. Damit ist immer ein einwandfreies Steuern der Kupplungsposition gewährleistet.

## Patentansprüche

1. Automatisch betätigte Kraftfahrzeug-Kupplung (3) mit einem Stellglied (4) zum Betätigen der Kupplung, einem die axiale Position der Kupplung entlang eines Kupplungsweges erfassenden Positionssensor (32) und einer die Position der Kupplung festlegenden Steuerung (8), mit der das Signal des Positionssensors (32) auf Plausibilität überprüft wird,
**dadurch gekennzeichnet,**
- **dass** die Steuerung einen Regelkreis (14) mit einem inversen Modell der Regelstrecke (16) enthält,
- **dass** das die Kupplungsposition erfassende Signal des Positionssensors (32) durch Vergleich mit einer anhand des Modells der Regelstrecke (16) berechneten Kupplungsposition überprüft wird, und
- **dass** bei fehlender Plausibilität die Kupplungsposition mit dem Modell der Regelstrecke (16) ermittelt wird.

2. Kupplung nach Anspruch 1, **dadurch gekennzeichnet, dass** der Kupplungsweg (KW) einen Referenzpunkt (TP) aufweist, der von der Steuerung (8) für eine Überprüfung des Sensorsignals benutzt wird.

3. Kupplung nach Anspruch 1, **dadurch gekennzeichnet, dass** der Positionssensor (32) als linearer Sensor ausgebildet ist.

4. Kupplung nach Anspruch 1, **dadurch gekennzeichnet, dass** die Steuerung (8) mindestens einen zusätzlichen, die Position der Kupplung (3) erfassenden Punktsensor (32) aufweist.

5. Kupplung nach Anspruch 1, **dadurch gekennzeichnet, dass** die Steuerung (8) mindestens einen zusätzlichen, die Position der Kupplung (3) erfassenden Sensor mit einem kleinen Messbereich aufweist.

6. Verfahren zum Steuern einer automatisch betätigten Kraftfahrzeug-Kupplung nach Anspruch 1, **dadurch gekennzeichnet, dass** das Signal des Positionssensors der Kupplung mit einem in einem Regelkreis enthaltenen Streckenmodell auf Plausibilität überprüft wird, und dass beim Auftreten einer Abweichung ein Ausfall des Positionssensors erkannt und die Stellung der Kupplung mit dem Streckenmodell ermittelt wird.

7. Verfahren nach Anspruch 6, **dadurch gekennzeichnet, dass** die Steuerung anhand der von dem Positionssensor erfassten Stellung der Kupplung laufend überprüft wird und dass beim Auftreten einer Abweichung Parameter des Stellglieds korrigiert werden.

8. Verfahren nach Anspruch 6, **dadurch gekennzeichnet, dass** bei einem Ausfall des Positionssensors der Berührpunkt der Kupplung als Referenzpunkt zum Einstellen der Kupplungsposition verwendet wird.

9. Verfahren nach Anspruch 6, **dadurch gekennzeichnet, dass** der Positionssensor und das Streckenmodell sich gegenseitig überwachen.

10. Verfahren nach Anspruch 6, **gekennzeichnet durch** folgende Schritte:
- das Streckenmodell wird **durch** den Positionssensor trainiert;
- der Positionssensor und das Streckenmodell überwachen sich gegenseitig;
- bei fehlender Übereinstimmung zwischen dem Sensorsignal und der mit dem Streckenmodell berechneten Kupplungsposition erfolgt ein Vergleich mit einem Referenzpunkt;
- ergibt der Vergleich, dass das Sensorsignal in Ordnung ist, wird das Trainieren des Streckenmodells wieder aufgenommen,
- ergibt aber der Vergleich, dass das Sensorsignal nicht in Ordnung ist, wird die Kupplungsposition mit dem Streckenmodell ermittelt.

## Claims

1. Automatically-operated motor vehicle clutch (3) with an actuator (4) to operate the clutch, a position sensor (32) to record the axial position of the clutch along a clutch path and a controller to determine the position of the clutch (8), with which the signal of the position sensor (32) is checked for plausibility,
**characterized in that**,
- the controller includes a closed-loop circuit (14) with an inverse model of the closed-loop control path (16),
- the position sensor (32) signal recording the clutch position is checked by comparing it with a clutch position calculated on the basis of the model of the closed-loop control path (16), and
- if the plausibility check fails, the clutch position is determined with the model of the closed-loop control path (16).

2. Clutch in accordance with Claim 1, **characterized in that** the clutch path (KW) features a reference point (TP) which is used by the controller (8) for checking the sensor signal.

3. Clutch in accordance with Claim 1, **characterized in that** the position sensor (32) is embodied as a linear sensor.

4. Clutch in accordance with Claim 1, **characterized in that** the controller (8) features at least one point sensor (32) to record the position of the clutch (3).

5. Clutch in accordance with Claim 1, **characterized in that** the controller (8) features at least one additional sensor with a small measurement range to record the position of the clutch (3).

6. Method for controlling an automatically motor operated vehicle clutch in accordance with Claim 1, **characterized in that** the signal of the position sensor of the clutch is checked for plausibility with a path model included in a closed-loop control facility, and when a deviation occurs, a failure of the position sensor is detected and the position of the clutch is determined with the path model.

7. Method in accordance with Claim 6, **characterized in that** the controller is subject to ongoing checks on the basis of the clutch position recorded by the position sensor and that when a deviation occurs, parameters of the actuator are corrected.

8. Method in accordance with Claim 6, **characterized in that**, on failure of the position sensor, the contact point of the clutch is used as a reference point for setting the clutch position.

9. Method in accordance with Claim 6, **characterized in that** the position sensor and the path model monitor each other.

10. Method in accordance with Claim 6, **characterized by** the following steps:
- the path model is trained by the position sensor;
- the position sensor und the path model monitor each other;
- if the sensor signal and the position of the clutch calculated with the path model do not match a comparison is made with a reference point;
- if the comparison shows the sensor signal to be correct, training of the path model is resumed,
- if the comparison shows that the sensor signal is not correct, the clutch position is determined with the path model.

## Revendications

1. Embrayage pour véhicule automobile à fonctionnement automatique (3) avec un actionneur (4) servant à actionner l'embrayage, un capteur de position (32) servant à détecter la position axiale de l'embrayage le long d'une course d'embrayage et un dispositif de contrôle (8) servant à déterminer la position de l'embrayage, et qui est utilisé pour vérifier la plausibilité du signal produit par le capteur de position (32), **caractérisé en ce que** :
- le dispositif de contrôle comporte un circuit de commande (14) incluant un modèle inverse de la course de régulation (16),
- le signal du capteur de position (32) portant la position de l'embrayage est vérifié par comparaison avec la position de l'embrayage calculée à l'aide du modèle de la course de régulation (16), et
- en l'absence de plausibilité la position de l'embrayage est déterminée à l'aide du modèle de la course de régulation (16).

2. Embrayage selon la revendication 1, **caractérisé en ce que** la course de l'embrayage (KW) présente un point de référence (TP) qui est utitisé par le dispositif de contrôle (8) pour vérifier le signal du capteur.

3. Embrayage selon la revendication 1, **caractérisé en ce que** le capteur de position (32) est constitué d'un capteur linéaire.

4. Embrayage selon la revendication 1, **caractérisé en ce que** le dispositif de contrôle (8) présente au moins un capteur ponctuel (32) supplémentaire servant à capter la position de l'embrayage (3).

5. Embrayage selon la revendication 1, **caractérisé en ce que** le dispositif de contrôle (8) présente au moins un capteur supplémentaire ayant une plage de détection réduite servant à capter la position de l'embrayage (3).

6. Procédé pour le contrôle d'un embrayage pour véhicule automobile à fonctionnement automatique selon la revendication 1, **caractérisé en ce que** le signal du capteur de position de l'embrayage est vérifié avec un modèle de course inclus dans un circuit de régulation pour en confirmer la plausibilité, et **en ce que** lorsqu'un écart est détecté une défaillance du capteur de position est diagnostiquée et la position de l'embrayage est déterminée à l'aide du modèle de course.

7. Procédé selon la revendication 6, **caractérisé en ce que** le dispositif de contrôle est soumis à une vérification continue sur la base de la position de l'embrayage détectée par le capteur de position, et que les paramètres de l'actionneur sont corrigés lorsqu'un écart se manifeste.

8. Procédé selon la revendication 6, **caractérisé en ce qu'**en cas de défaillance du capteur de position, le point de contact de l'embrayage est utilisé comme point de référence pour le réglage de la position de l'embrayage.

9. Procédé selon la revendication 6, **caractérisé en ce que** le capteur de position et le modèle de course se surveillent mutuellement.

10. Procédé selon la revendication 6, **caractérisé par** les étapes suivantes :
- l'apprentissage du modèle de course est exécuté à l'aide du capteur de position ;
- le capteur de position et le modèle de course se surveillent mutuellement ;
- lorsque le signal du capteur et la position de l'embrayage calculée à l'aide du modèle de course ne concordent pas, on exécute une comparaison avec un point de référence ;
- si la comparaison révèle que le signal du capteur est correct, on reprend l'apprentissage du modèle de course,
- si par contre, la comparaison révèle que le signal du capteur est erroné, la position de l'embrayage est déterminée à l'aide du modèle de course.
